# FASCICULE DE BREVET EUROPEEN

(11) **EP 3 427 988 B1**
(45) Date de publication et mention de la délivrance du brevet: **09.09.2020**
(21) Numéro de dépôt: 18181613.3
(22) Date de dépôt: 04.07.2018
(51) Int. Cl.: B60K 11/08

(54) **DISPOSITIF D'OBTURATION POUR ENTREE D'AIR DE FACE AVANT DE VEHICULE AUTOMOBILE**
VORRICHTUNG ZUM ABDICHTEN DES LUFTEINSTROMS AM FRONTTEIL EINES KRAFTFAHRZEUGS
CLOSING SYSTEM FOR FRONT FACE AIR INPUT OF A MOTOR VEHICLE

(30) Priorité: 12.07.2017 FR 1756627
(43) Date de publication de la demande: 16.01.2019
(73) Titulaire: Valeo Systemes Thermiques-THS, 78322 Le Mesnil Saint Denis Cedex (FR)
(72) Inventeur: LAIR, Guillaume, 78322 LE MESNIL SAINT DENIS Cedex (FR); MINERO, Victor-Manuel, 78322 LE MESNIL SAINT DENIS Cedex (FR); ARAB, Karim, 78322 LE MESNIL SAINT DENIS CEDEX (FR)
(74) Mandataire: Tran, Chi-Hai

(56) Documents cités:
- EP-A1- 0 500 430
- EP-A1- 2 687 394
- EP-A1- 3 210 811
- DE-A1-102012 209 074

## Description

La présente invention se rapporte au domaine des dispositifs d'obturation de flux d'air de face avant de véhicule automobile, et plus précisément à un cadre support d'un tel dispositif d'obturation.

Les faces avant de véhicules automobiles sont généralement composées de deux entrées d'air principales, dites voie haute et voie basse, séparées par une poutre pare-choc. Derrière cette poutre pare-choc, sont généralement placés des échangeurs de chaleur du véhicule automobile, comme par exemple celui utilisé pour la climatisation de l'habitacle et/ou encore celui utilisé pour le refroidissement du moteur.

Il est également connu de disposer, dans le trajet d'air passant par les entrées d'air principales, et plus généralement la voie basse, un cadre support comportant une multiplicité de volets montés pivotants autour d'axes parallèles et propres à prendre une multiplicité de positions angulaires différentes, comprises entre une position d'ouverture et une position d'obturation, sous l'action de moyens de commande appropriés, formant ainsi un dispositif d'obturation s'apparentant à une jalousie. Ce dispositif d'obturation est parfois appelé obturateur actif de calandre, ou encore module d'entrée d'air piloté. Un tel dispositif d'obturation peut également être désigné par l'acronyme AGS (pour « Active Grille Shutter » en anglais).

Le dispositif d'obturation permet d'ajuster le débit d'air traversant les entrées d'airs et arrivant aux échangeurs de chaleur. Il est ainsi possible d'optimiser l'efficacité de ces échangeurs de chaleur en fonction des besoins en faisant varier la quantité d'air qu'ils reçoivent. De plus, à grande vitesse, les volets en position d'obturation permettent de diminuer le coefficient de traînée du véhicule automobile et ainsi améliorent l'aérodynamisme dudit véhicule automobile. Le dispositif d'obturation permet donc de réduire la consommation d'énergie et la pollution lorsque le moteur n'a pas besoin d'être refroidi par l'air extérieur.

Le dispositif d'obturation comprend de manière conventionnelle un actionneur (également appelé actuateur ou moteur) commandant les volets et permettant l'ouverture ou la fermeture de l'entrée d'air : les volets sont ouverts lorsque le moteur du véhicule automobile a besoin d'être refroidi et les volets sont fermés lorsque le moteur du véhicule automobile est suffisamment refroidi. Plus précisément, l'actionneur est relié à un volet, appelé volet moteur, les autres volets étant reliés au volet moteur par un organe de commande permettant ainsi leur pivotement sous l'effet du pivotement du volet moteur.

La Demanderesse a constaté que les volets en position ouverte ou en position fermée peuvent vibrer sous l'action de l'écoulement turbulent de l'air pénétrant dans la calandre. Cette vibration pouvant notamment entraîner une fatigue des matériaux constitutifs des volets et une pollution acoustique notable. Afin de limiter cette fatigue des matériaux et de limiter les vibrations, la Demanderesse a développé un cadre support présentant des butées destinées à servir d'appui à au moins une extrémité des volets lorsqu'ils occupent une position extrémale ouverte ou fermée.

Cependant, au moins une des extrémités du volet reliée à l'actionneur, également appelé volet moteur, arrive en premier sur sa butée, également appelée butée de surcourse. La Demanderesse a constaté une fragilisation de cette butée de surcourse à cause de la force appliquée par le volet moteur sous l'effet de l'actionneur sur cette dernière afin d'amener les autres volets de l'ensemble de volets au contact de leurs butées de surcourse, cette fragilisation pouvant aller jusqu'à la rupture de cette butée de surcourse, en particulier après un nombre élevé de manœuvres.

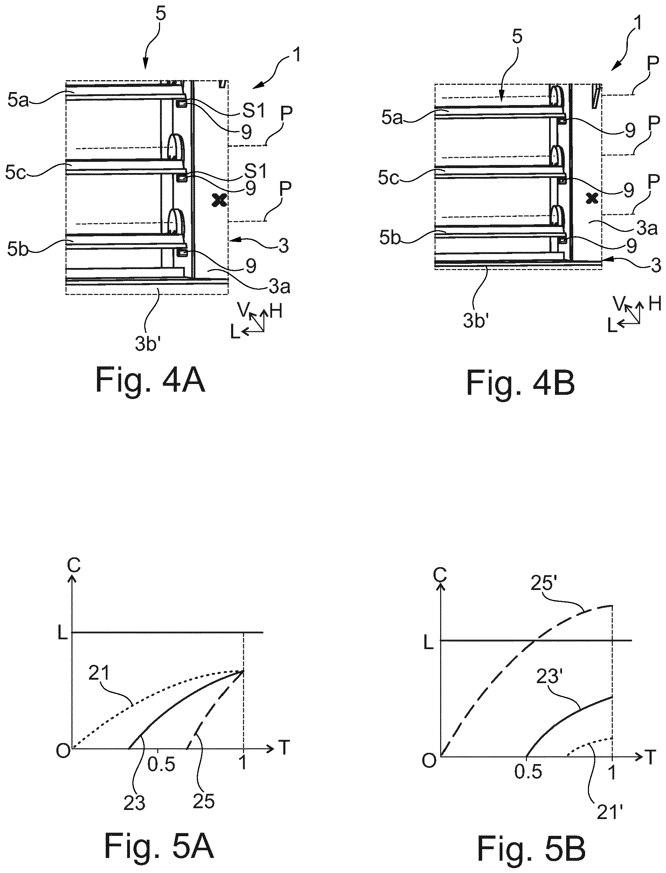

La cinématique d'un dispositif d'obturation comprenant trois volets est illustrée en référence à la figure 5B. Plus particulièrement le dispositif d'obturation présente un volet moteur illustré par la courbe 25', un volet intermédiaire illustré par la courbe 23' et un volet inférieur, disposé à l'opposé du volet moteur par rapport au volet intermédiaire, illustré par la courbe 21'. Ce diagramme présente un axe des ordonnées illustrant la contrainte C exercée par le volet sur sa butée de surcourse et un axe des abscisses illustrant le temps T selon une échelle arbitraire dans laquelle au temps T égal à zéro un premier volet, et dans ce cas le volet moteur, arrive en contact avec sa butée de surcourse, et au temps T égal à 1, les différents volets sont en contact avec leur butée de surcourse. Ainsi, au temps T égal à 1, la contrainte C exercée par les volets sur leurs butées de surcourse respectives est donc maximale. Par ailleurs, il est représenté sur l'axe des ordonnées une limite en rupture L des butées. En fonctionnement du dispositif d'obturation selon l'art antérieur, le volet moteur, illustré par la courbe 25', arrive en premier avec sa butée de surcourse 9. Par ailleurs, l'actionneur 7 continue son mouvement de pivotement sur le volet moteur de manière à ce que le volet intermédiaire, illustré par la courbe 23', et le volet inférieur, illustré par la courbe 21', arrivent en contact avec leur butée de surcourse. Cette arrivée différée des volets selon l'art antérieur est notamment due à un jeu de fonctionnement de l'organe de commande. Comme illustré sur ce diagramme, le volet moteur exerce une contrainte C sur sa butée de surcourse supérieure à la limite en rupture L des butées de surcourse. Cela peut provoquer une rupture de cette butée de surcourse, nuisant ainsi au bon fonctionnement du dispositif d'obturation. Des dispositifs d'obturation pour entrée d'air de face avant de véhicules propres à l'état de l'art à ce sujet sont montrés par les documents DE102012209074A1 et EP3210811A1.

Un objectif de la présente invention est de proposer un dispositif d'obturation présentant un cadre support permettant de pallier aux inconvénients de l'art antérieur exposés ci-dessus, et en particulier de réduire le risque de rupture des butées de surcourse.

Afin d'atteindre au moins partiellement au moins un des objectifs précités, la présente invention a pour objet un dispositif d'obturation pour entrée d'air de face avant de véhicule automobile comprenant un cadre support présentant :
- deux montants latéraux,
- deux traverses d'extrémité reliant les deux montants latéraux, et
- au moins un ensemble de volets pivotants autour d'un axe de pivotement entre une première position extrémale ouverte et une deuxième position extrémale fermée, l'axe de pivotement des volets étant disposé parallèlement aux traverses d'extrémité, et
- au moins un élément de commande configuré pour piloter le positionnement des volets comportant un actionneur relié à un volet, dit volet moteur de l'ensemble de volets, de sorte à entraîner en pivotement ledit volet moteur, les autres volets de l'ensemble de volets étant reliés audit volet moteur par un organe de commande,
le cadre support comportant au niveau d'au moins une extrémité de chaque volet au moins une butée de surcourse configurée pour servir d'appui au volet lorsqu'il occupe sa première position extrémale ouverte ou sa deuxième position extrémale fermée,
les butées de surcourse étant disposées sur le cadre périphérique selon un décalage de position de manière à ce que le volet moteur arrive en dernier en contact avec sa butée de surcourse lorsqu'il atteint une position extrémale.

Le décalage de position des butées de surcourse permet le déphasage des volets de manière à ce que la force appliquée par l'actionneur permettant le pivotement des volets est distribuée sur l'ensemble des butées de surcourse, permettant ainsi de réduire voire supprimer la fatigue de la butée de surcourse du volet moteur.

Le dispositif d'obturation peut présenter en outre une ou plusieurs des caractéristiques suivantes prises seules ou en combinaison.

Selon une première variante, le décalage des butées de surcourse est tel que les volets autres que le volet moteur arrivent simultanément en contact avec leur butée de surcourse lorsqu'ils atteignent une position extrémale.

Selon une deuxième variante, le ou les volets les plus éloignés du volet moteur arrivent en premier en contact avec leurs butées de surcourse lorsqu'ils atteignent une position extrémale, les autres volets arrivant ensuite selon un déphasage en contact avec leurs butées de surcourse lorsqu'ils atteignent une position extrémale.

Selon un aspect, les butées de surcourse sont disposées sur un montant du cadre support disposé du côté portant l'élément de commande.

Selon un autre aspect, les butées de surcourse sont disposées sur un montant latéral du cadre support disposé du côté opposé au montant portant l'élément de commande.

Selon encore un autre aspect, le cadre support présente des butées de surcourse configurées pour coopérer avec chaque extrémité de chaque volet du dispositif d'obturation.

Selon un premier mode de réalisation, le cadre support présente au niveau de l'au moins une extrémité de chaque volet une seule butée de surcourse, ladite butée de surcourse présentant une première surface configurée pour coopérer avec un premier bord dudit volet lorsqu'il occupe sa première position extrémale ouverte et une deuxième surface configurée pour coopérer avec un deuxième bord dudit volet lorsqu'il occupe sa deuxième position extrémale fermée.

Selon ce premier mode de réalisation, les première et deuxième surfaces des butées de surcourse sont planes.

Selon un deuxième mode de réalisation, le cadre support présente au niveau de l'au moins une extrémité de chaque volet une première et une deuxième butées de surcourse, la première butée de surcourse présentant une surface configurée pour coopérer avec le premier bord dudit volet lorsqu'il occupe sa première position extrémale ouverte et la deuxième butée de surcourse présentant une surface configurée pour coopérer avec le deuxième bord dudit volet lorsqu'il occupe sa deuxième position extrémale fermée.

Selon ce deuxième mode de réalisation, les surfaces des première et deuxième butées de surcourse coopérant avec les premier et deuxième bords des volets sont planes.

Selon un premier aspect, la position des butées de surcourse est décalée selon la hauteur définie entre les traverses d'extrémité du cadre support de manière à assurer le déphasage de position des volets lorsqu'ils arrivent dans leur première position extrémale ouverte.

Selon un deuxième aspect, la position des butées de surcourse est décalée selon la profondeur définie par la section latérale des traverses d'extrémité du cadre support de manière à assurer le déphasage de position des volets lorsqu'ils arrivent dans leur deuxième position extrémale fermée.

Les butées de surcourse sont agencées de façon décalée de manière à permettre une distribution de la force de pression de l'actionneur de manière à ce que la force de pression exercée par les volets sur chaque butée de surcourse est inférieure à la limite en rupture desdites butées de surcourse.

Selon un mode de réalisation particulier, le volet moteur est le volet disposé le plus proche de la traverse d'extrémité supérieure du cadre support.

Les butées de surcourse peuvent venir de matière avec le cadre support.

Le cadre support peut être fabriqué par moulage.

D'autres caractéristiques et avantages de la présente invention apparaîtront plus clairement à la lecture de la description suivante, fournie à titre illustratif et non limitatif, et des dessins annexés dans lesquels :
- la figure 1 est une représentation schématique en perspective d'un dispositif d'obturation,
- la figure 2 est une représentation schématique partielle en perspective d'un dispositif d'obturation selon un premier mode de réalisation,
- la figure 3 est une représentation schématique partielle en perspective d'un dispositif d'obturation selon un deuxième mode de réalisation,
- la figure 4A est une représentation schématique en perspective d'un montant latéral au cours d'une cinématique de pivotement des volets dans une première position extrémale ouverte,
- la figure 4B est une représentation schématique en perspective du montant latéral de la figure 4A lorsque l'ensemble des volets est dans la première position extrémale ouverte,
- la figure 5A est une représentation graphique de la cinématique des volets lorsqu'ils atteignent leur première position extrémale ouverte ou leur deuxième position extrémale fermée, et
- la figure 5B est une représentation graphique de la cinématique des volets lorsqu'ils atteignent leur première position extrémale ouverte ou leur deuxième position extrémale fermée selon l'art antérieur.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description suivante, il est fait référence à un premier et à un deuxième ensembles de volets, à une première et à une deuxième butées de surcourse, et à un premier et à un deuxième bords des volets. Il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps par exemple pour apprécier la structure du dispositif d'obturation ou encore l'agencement des différents éléments le constituant.

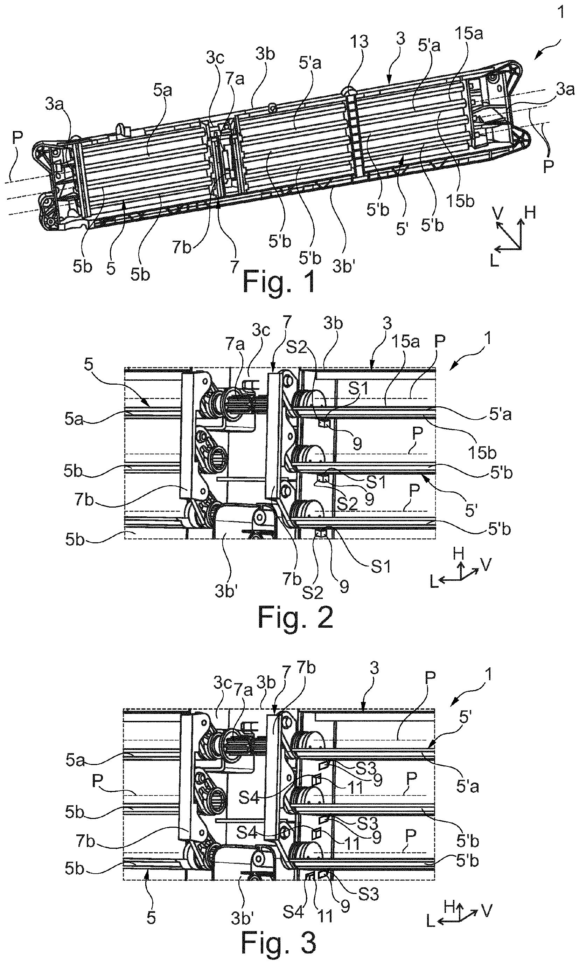

Dans la description suivante, on se réfère à une orientation en fonction des axes Longitudinaux, Verticaux et définissant une Hauteur tels que définis arbitrairement par le trièdre H, L, V, notamment représenté sur les figures 1 à 4B. Le choix des appellations de ces axes n'est pas limitatif de l'orientation que peut prendre le dispositif d'obturation dans son application à un véhicule automobile.

Dans la description suivante, on entend par « supérieur » et « inférieur », la disposition des éléments sur le dispositif d'obturation d'entrée d'air de face avant à l'état monté du dispositif d'obturation sur le véhicule automobile.

D'autre part, on entend dans la description suivante par « bord du volet », un côté s'étendant parallèlement à l'axe longitudinal L du trièdre représenté en référence aux figures 1 à 4B.

En référence à la figure 1, il est représenté un dispositif d'obturation 1 pour entrée d'air de face avant de véhicule automobile. Le dispositif d'obturation 1 comprend un cadre support 3 présentant deux montants latéraux 3a et deux traverses d'extrémité 3b, 3b' reliant les deux montants latéraux 3a entre eux, définissant ainsi une ouverture du cadre support 3. Plus particulièrement, le cadre support 3 présente une traverse d'extrémité supérieure 3b et une traverse d'extrémité inférieure 3b', ces orientations correspondant arbitrairement à la disposition du dispositif d'obturation 1 à l'état monté dans le véhicule automobile.

Par ailleurs, le cadre support 3 présente au moins un ensemble de volets 5 disposés à l'intérieur de l'ouverture. Les volets 5 sont pivotants autour d'un axe de pivotement P entre une première position extrémale ouverte et une deuxième position extrémale fermée afin de permettre de réguler le flux d'air traversant le dispositif d'obturation 1. Plus précisément, lorsque les volets 5 occupent leur première position extrémale ouverte, le flux d'air peut traverser le dispositif d'obturation 1 et lorsque les volets 5 occupent leur deuxième position extrémale fermée, les volets 5 s'opposent au passage du flux d'air et celui-ci ne peut pas traverser le dispositif d'obturation 1. Les axes de pivotement P des volets 5 sont disposés parallèlement aux traverses d'extrémité supérieure 3b et inférieure 3b'.

De plus, le cadre support 3 présente au moins un élément de commande 7 configuré pour piloter le positionnement, et donc le pivotement, des volets 5 entre leur première position extrémale ouverte et leur deuxième position extrémale fermée. L'élément de commande 7 comporte un actionneur 7a et un organe de commande 7b. L'actionneur 7a est relié à un volet 5, dit volet moteur 5a de l'ensemble de volets 5, afin d'entraîner en pivotement ce volet moteur 5a. Les autres volets 5b de l'ensemble de volets 5 sont reliés au volet moteur 5a par l'organe de commande 7b qui transmet le mouvement de pivotement du volet moteur 5a aux autres volets 5b. En référence à la figure 1, l'élément de commande 7 peut être disposé sur un montant 3c du cadre support 3 afin de pouvoir entraîner en pivotement un premier ensemble de volets 5 et un deuxième ensemble de volets 5' simultanément. Selon une variante non représentée ici, l'élément de commande 7 peut être disposé sur un montant latéral 3a du cadre support 3 de manière à entraîner en pivotement un seul ensemble de volets 5.

Par ailleurs, le cadre support 3 comporte au niveau d'au moins une extrémité de chaque volet 5 au moins une butée de surcourse 9, 11 (visibles sur les figures 2 et 3) configurée pour servir d'appui au volet 5 lorsqu'il occupe sa première position extrémale ouverte ou sa deuxième position extrémale fermée. En effet, la présence de ces butées de surcourse 9, 11 permet de limiter les vibrations des volets 5 lorsqu'ils occupent une de leurs positions extrémales et également de prévenir la fatigue des matériaux constitutifs des volets 5. Avantageusement, les butées de surcourse 9, 11 sont disposées sur le cadre périphérique 3 selon un décalage de position de manière à ce que le volet moteur 5a arrive en dernier en contact avec sa butée de surcourse 9, 11 lorsqu'il atteint une position extrémale ouverte ou fermée. Ainsi, la force appliquée par le volet moteur 5a sur sa butée de surcourse 9, 11 est moindre et la fragilisation de cette butée de surcourse 9, 11 peut ainsi être prévenue. En effet, grâce à ce déphasage, la force de l'actionneur 7a permettant le pivotement des volets 5 est répartie sur l'ensemble des butées de surcourse 9, 11 ce qui permet de soulager l'au moins une butée de surcourse 9, 11 du volet moteur 5a. Le décalage des butées de surcourse 9, 11 peut dépendre de la force de l'actionneur 7a, de la hauteur des volets 5, de la forme des volets 5, ou encore de l'épaisseur des volets 5.

Selon un mode de réalisation particulier, le décalage des butées de surcourse 9, 11 est tel que les volets 5b autres que le volet moteur 5a arrivent simultanément en contact avec leur butée de surcourse 9, 11 lorsqu'ils atteignent une position extrémale. Ainsi, la force de l'actionneur 7a est répartie dans un premier temps sur l'ensemble des butées de surcourse 9, 11 des autres volets 5b, puis dans un second temps sur l'ensemble des butées de surcourse 9, 11 du cadre support 3.

Selon un autre mode de réalisation, le ou les volets 5b les plus éloignés du volet moteur 5a arrivent en premier en contact avec leurs butées de surcourse 9, 11 lorsqu'ils atteignent une position extrémale, les autres volets 5 arrivant ensuite selon un déphasage en contact avec leurs butées de surcourse 9, 11 lorsqu'ils atteignent une position extrémale. De cette manière, la force de l'actionneur 7a pour permettre le pivotement de l'ensemble de volets 5 est répartie progressivement sur toutes les butées de surcourse 9, 11, ce qui permet de soulager l'au moins une butée de surcourse 9, 11 de l'au moins un volet moteur 5a.

Lorsque l'élément de commande 7 est configuré pour entraîner en pivotement deux ensembles de volets 5, les butées de surcourse 9, 11 peuvent être disposées sur le montant 3c du cadre support 3, comme illustré en référence aux figures 2 et 3. Selon une variante, les butées de surcourse 9, 11 peuvent être disposées sur un montant latéral 3a du cadre support 3, comme illustré en référence aux figures 4A et 4B. Selon encore une autre variante de ce mode de réalisation, les butées de surcourse 9, 11 peuvent être disposées sur le montant 3c et sur un montant latéral 3a du cadre support 3. Dans ce cas, les butées de surcourse 9, 11 disposées sur le montant latéral 3a du cadre support 3 peuvent être décalée ou non, le déphasage des volets 5 étant principalement assuré par le décalage des butées de surcourse 9, 11 portée par le montant 3c. En effet, ce sont les butées de surcourse 9, 11 disposées les plus proches de l'élément de commande 7 qui subissent le plus de contraintes de la part des volets 5. De même, lorsque l'élément de commande 7 est disposé au niveau d'un montant latéral 3a, les butées de surcourse 9, 11 peuvent être disposées sur le montant latéral 3a présentant l'élément de commande 7, sur le montant latéral 3a opposé à l'élément de commande 7 ou encore sur les deux montants latéraux 3a.

Selon une première variante, la position des butées de surcourse 9, 11 est décalée selon la hauteur définie entre les traverses d'extrémité supérieure 3b et inférieure 3b' du cadre support 3, c'est-à-dire selon l'axe H du trièdre des figures 1 à 4B. Ce décalage selon la hauteur permet d'assurer le déphasage de position des volets 5 lorsqu'ils arrivent dans leur première position extrémale ouverte.

Selon une deuxième variante, la position des butées de surcourse 9, 11 est décalée selon la profondeur définie par la section latérale des traverses d'extrémité supérieure 3b et inférieure 3b' du cadre support 3, c'est-à-dire selon l'axe V du trièdre des figures 1 à 4B. Ce décalage selon la profondeur permet d'assurer le déphasage de position des volets 5 lorsqu'ils arrivent dans leur deuxième position extrémale fermée.

Selon le mode de réalisation particulier de la figure 1, le cadre support 3 est fabriqué par moulage. Par ailleurs, selon ce mode de réalisation particulier, les butées de surcourse 9, 11 viennent de matière avec le cadre support 3, ce qui permet de rigidifier les butées de surcourse 9, 11 en supprimant la jonction entre la butée de surcourse 9, 11 et le cadre support 3, cette jonction pouvant constituer un point de rupture. De plus, le cadre support présente un élément de commande 7 disposé au niveau d'un montant 3c et configuré pour entraîner en pivotement un premier ensemble de volets 5 et un deuxième ensemble de volets 5'. De plus, le cadre support 3 présente en outre une pièce relais 13 disposée sensiblement au centre du deuxième ensemble de volets 5' afin d'assurer le renfort de ces volets 5' de manière à prévenir leur flexion sous l'effet du flux d'air lorsqu'ils occupent notamment leur deuxième position extrémale fermée du fait de leur longueur.

En référence à la figure 2, il est représenté partiellement le dispositif d'obturation selon un premier mode de réalisation particulier. Selon ce premier mode de réalisation particulier, l'élément de commande 7 est disposé au niveau d'un montant 3c du cadre support 3 et est configuré pour entraîner en pivotement un premier ensemble de volets 5 et un deuxième ensemble de volets 5'. De plus, le cadre support 3 présente au niveau de l'au moins une extrémité de chaque volet 5 une seule butée de surcourse 9, et plus précisément au niveau du montant 3c selon ce mode de réalisation particulier. Selon ce mode de réalisation particulier, les volets moteur 5a, 5'a sont les volets 5 disposés les plus proche de la traverse d'extrémité supérieure 3b du cadre support 3. Par ailleurs, les butées de surcourse 9 présentent chacune une première surface S1 configurée pour coopérer avec un premier bord 15a dudit volet 5 lorsqu'il occupe sa première position extrémale ouverte et une deuxième surface S2 configurée pour coopérer avec un deuxième bord 15b dudit volet 5 lorsqu'il occupe sa deuxième position extrémale fermée. Selon le mode de réalisation particulier de la figure 2, les première S1 et deuxième S2 surfaces des butées de surcourse 9 sont planes. L'utilisation de surfaces planes pour la coopération des butées de surcourse 9 avec les premier 15a ou deuxième 15b bords du volet 5 permet une bonne répartition de la force de pivotement exercée par le volet 5 sur la butée de surcourse 9 sous l'effet de l'actionneur 7a.

Selon un autre mode de réalisation non représenté ici, les montants latéraux 3a peuvent présenter les butées de surcourse 9 destinées à coopérer avec l'extrémité du volet 5, 5' opposée à celle reliée à l'organe de commande 7b lorsque les volets 5, 5' occupent leur première position extrémale ouverte ou leur deuxième position extrémale fermée.

Selon encore un autre mode de réalisation non représenté ici, les montants latéraux 3a et le montant 3c peuvent présenter les butées de surcourse 9 de manière à ce que chaque extrémité des volets 5, 5' soit en contact avec deux butées de surcourse 9 lorsqu'ils occupent leur première position extrémale ouverte ou leur deuxième position extrémale fermée.

Selon d'autres modes de réalisation non représentés ici, les première S1 et deuxième S2 surfaces des butées de surcourse 9 peuvent présenter une autre forme géométrique que plane, comme par exemple une forme circulaire ou elliptique.

En référence à la figure 3, il est représenté partiellement le dispositif d'obturation 1 selon un deuxième mode de réalisation particulier. Selon ce deuxième mode de réalisation particulier, l'élément de commande 7 est également disposé sur un montant 3c du cadre support 3 et est configuré pour entraîner en pivotement un premier ensemble de volets 5 et un deuxième ensemble de volets 5'. Le cadre support 3 présente au niveau de l'au moins une extrémité de chaque volet 5 une première 9 et une deuxième 11 butées de surcourse, et plus précisément au niveau du montant 3c selon ce mode de réalisation particulier. La première butée de surcourse 9 présente une surface S3 configurée pour coopérer avec le premier bord 15a du volet 5, 5' lorsqu'il occupe sa première position extrémale ouverte. La deuxième butée de surcourse 11 présente quant à elle une surface S4 configurée pour coopérer avec le deuxième bord 15b du volet 5, 5' lorsqu'il occupe sa deuxième position extrémale fermée. Selon ce deuxième mode de réalisation les premières butées de surcourse 9 peuvent être décalées selon la hauteur afin d'assurer le déphasage des volets 5, 5' lorsqu'ils arrivent dans leur première position extrémale ouverte et les deuxième butées de surcourse 11 peuvent être décalées selon la profondeur de manière à assurer le déphasage des volets 5, 5' lorsqu'ils arrivent dans leur deuxième position extrémale fermée.

Selon une variante non représentée ici, les première 9 et deuxième 11 butées de surcourse peuvent être disposées sur les montants latéraux 3a du cadre support 3 de manière à ce que l'extrémité des volets 5, 5' opposée à celle reliée à l'organe de commande 7b lorsque les volets 5, 5' occupent leur première position extrémale ouverte ou leur deuxième position extrémale fermée.

Selon encore une autre variante non représentée ici, le montant 3c et les montants latéraux 3a du cadre support 3 peuvent présenter les première 9 et deuxième 11 butées de surcourse de manière à ce que chaque extrémité des volets 5, 5', et plus précisément le premier bord 15a, soit en contact avec une première butée de surcourse 9 lorsque les volets 5, 5' occupent leur première position extrémale ouverte ou en contact avec une deuxième butée de surcourse 11, et plus précisément de le deuxième bord 15b, lorsque les volets 5, 5' occupent leur deuxième position extrémale fermée.

Selon ce deuxième mode de réalisation particulier, les surfaces S3, S4 des première 9 et deuxième 11 butées de surcourse coopérant avec les premier 15a et deuxième 15b bords des volets 5 sont planes. Comme précédemment, d'autres formes géométriques pour ces surfaces S3, S4 peuvent être envisagées.

En référence aux figures 4A à 5, il est représenté schématiquement la cinématique d'arrivée en première position extrémale ouverte ou en deuxième position extrémale fermée de l'ensemble de volets 5. Cette cinématique peut s'appliquer à un dispositif d'obturation 1 présentant l'élément de commande 7 disposé au niveau d'un montant 3c ou au niveau d'un montant latérale 3a. Plus précisément, les figures 4A et 4B correspondent à des représentations schématiques partielles du dispositif d'obturation au cours du passage dans la première position extrémale ouverte des volets 5 et la figure 5 est un diagramme représentant l'arrivée des différents volets 5 en contact avec leurs butées de surcourse 9, 11 respectives selon l'art antérieur et selon la présente invention.

En référence aux figures 4A et 4B, il est représenté l'extrémité des volets 5 disposée du côté d'un montant latéral 3a du cadre support 3. Selon ce mode de réalisation, le volet moteur 5a est le volet 5 disposé le plus proche de la traverse d'extrémité supérieure 3b du cadre support 3. De plus, le dispositif d'obturation 1 présente trois volets 5 : le volet moteur 5a, un volet inférieur 5b disposé le plus proche de la traverse d'extrémité inférieure 3b' et un volet intermédiaire 5c disposé entre le volet moteur 5a et le volet inférieur 5b. Les butées de surcourse 9 selon ce mode de réalisation particulier correspondent aux butées de surcourse 9 décrites en référence à la figure 2.

En référence à la figure 4A, le volet inférieur 5b arrive en contact avec son au moins une butée de surcourse 9 alors que le volet intermédiaire 5c et le volet moteur 5a ne sont pas encore en contact avec leurs butées de surcourse 9. Le volet intermédiaire 5c arrive ensuite en contact avec son au moins une butée de surcourse 9, et le volet moteur 5a arrive en dernier en contact avec son au moins une butée de surcourse 9, cette cinématique est développée plus en détail en référence à la figure 5.

En référence à la figure 4B, les trois volets 5 sont arrivés en contact avec leur butée de surcourse 9. Ils occupent donc chacun leur première position extrémale ouverte. Lorsque les volets 5 sont arrivés dans cette position, l'actionneur 7a de l'élément de commande 7 est configuré pour maintenir les volets 5 dans cette première position extrémale ouverte. A cet effet, l'actionneur 7a peut être arrêté ou il peut être configuré pour maintenir la position du volet moteur 5a.

En référence à la figure 5, il est représenté un diagramme représentant la contrainte exercée par les différents volets 5 sur leur au moins une butée de surcourse 9 respective au cours du temps selon la présente invention. Ce diagramme présente un axe des ordonnées illustrant la contrainte C exercée par le volet 5 sur sa butée de surcourse 9 et un axe des abscisses illustrant le temps T.

Le temps T ici présente une échelle arbitraire. En effet, au temps T égal à zéro un premier volet 5, et plus précisément le volet inférieur 5b selon ce mode de réalisation particulier, arrive en contact avec sa butée de surcourse 9 mais il n'exerce encore aucune contrainte sur cette butée de surcourse 9. Par ailleurs au temps T égal 1, l'ensemble des volets 5 sont en contact avec leurs butées de surcourse 9 et l'actionneur 7a peut être stoppé ou maintenir la contrainte sur le volet moteur 5a. Ainsi, au temps T égal à 1, la contrainte C exercée sur les butées de surcourse 9 est maximale.

Sur l'axe correspondant à la contrainte C figure une limite en rupture L des butées de surcourse 9. Cette limite en rupture L des butées de surcourse 9 peut être variable en fonction du matériau constituant ces butées de surcourse 9, ou encore en fonction des dimensions ou de la forme de ces butées de surcourse 9. Par ailleurs, ce diagramme présente trois courbe 21, 23, 25 correspondant chacune à la contrainte C exercée par un volet 5 du dispositif d'obturation 1 sur sa butée de surcourse 9. Plus précisément, la courbe 21 correspond au volet inférieur 5b, la courbe 23 correspond au volet intermédiaire 5c, et la courbe 25 correspond au volet moteur 5a.

Selon la présente invention, lorsque les volets 5 arrivent en première position extrémale ouverte ou en deuxième position extrémale fermée, le volet inférieur 5b, illustré par la courbe 21, arrive en premier en contact avec sa butée de surcourse 9. Le volet intermédiaire 5c, illustré par la courbe 23, arrive ensuite en contact avec sa butée de surcourse 9 et le volet moteur 5a, illustré par la courbe 25, arrive en dernier avec sa butée de surcourse 9. Ainsi, comme représenté sur ce diagramme, la contrainte C exercée par chacun des volets 5 sur sa butée de surcourse 9 respective est progressive et reste inférieure à la limite en rupture L des butées de surcourse 9, contrairement à l'art antérieur, illustré par la figure 5B, dans lequel la contrainte C exercée par le volet moteur 5a est supérieure à la limite en rupture L de la butée de surcourse 9. Plus précisément, les butées de surcourse 9 sont agencées de façon décalée de manière à permettre une distribution de la force de pression de l'actionneur 7a de manière à ce que la force de pression exercée par les volets 5 sur chaque butée de surcourse 9 est inférieure à la limite en rupture L des butées de surcourse 9. Ainsi, la fragilisation de la butée de surcourse 9 du volet moteur 5a et sa rupture peut ainsi être prévenue.

Dans le cas où le cadre support 3 présente une première 9 et une deuxième 11 butées de surcourse comme décrit en référence à la figure 3 correspondant au deuxième mode de réalisation, la cinématique décrite en référence à la figure 5 reste la même grâce au décalage selon la hauteur et/ou la profondeur des première 9 et deuxième 11 butées de surcourse.

Les modes de réalisation décrits ci-dessus sont des exemples donnés à titre illustratif et non limitatif. En effet, il est tout à fait possible pour l'homme de l'art d'utiliser toutes formes possibles pour les butées de surcourse 9, 11 en respectant le décalage des surfaces S1, S2, S3 ou S4 servant d'appui aux premier 15a et deuxième 15b bords des volets 5 de manière à assurer le déphasage des volets sans sortir du cadre de la présente invention. Par ailleurs, il est tout à fait possible pour l'homme de l'art de modifier le positionnement du volet moteur 5a dans le dispositif d'obturation 1 sans sortir du cadre de la présente invention. Il pourra par exemple positionner le volet moteur 5a au milieu du dispositif d'obturation 1. De plus, la cinématique de pivotement des volets est décrite pour un dispositif d'obturation 1 comprenant trois volets 5. Toutefois, il est tout à fait possible pour l'homme de l'art d'utiliser un dispositif d'obturation 1 présentant un nombre différent de volets 5 tout en conservant la même cinématique de pivotement sans sortir du cadre de la présente invention.

Ainsi, la prévention de la rupture des butées de surcourse 9, 11 présentes sur un cadre support 3 d'un dispositif d'obturation 1 d'entrée d'air de face avant de véhicule automobile est possible grâce au décalage de ces butées de surcourse 9, 11 en hauteur et/ou en profondeur afin de permettre un déphasage des volets 5 et ainsi une répartition de la force de l'actionneur 7a permettant l'entraînement en pivotement des volets sur l'ensemble des butées de surcourse 9, 11.

## Revendications

1. Dispositif d'obturation (1) pour entrée d'air de face avant de véhicule automobile comprenant un cadre support (3) présentant :
• deux montants latéraux (3a),
• deux traverses d'extrémité (3b, 3b') reliant les deux montants latéraux (3a), et
• au moins un ensemble de volets (5) pivotants autour d'un axe de pivotement (P) entre une première position extrémale ouverte et une deuxième position extrémale fermée, l'axe de pivotement (P) des volets (5) étant disposé parallèlement aux traverses d'extrémité (3b, 3b'), et
• au moins un élément de commande (7) configuré pour piloter le positionnement des volets (5) comportant un actionneur (7a) relié à un volet (5), dit volet moteur (5a) de l'ensemble de volets (5), de sorte à entraîner en pivotement ledit volet moteur (5a), les autres volets (5b) de l'ensemble de volets (5) étant reliés audit volet moteur (5a) par un organe de commande (7b),
le cadre support (3) comportant au niveau d'au moins une extrémité de chaque volet (5) au moins une butée de surcourse (9, 11) configurée pour servir d'appui au volet (5) lorsqu'il occupe sa première position extrémale ouverte ou sa deuxième position extrémale fermée,
**caractérisé en ce que** les butées de surcourse (9, 11) sont disposées sur le cadre périphérique (3) selon un décalage de position de manière à ce que le volet moteur (5a) arrive en dernier en contact avec sa butée de surcourse (9, 11) lorsqu'il atteint une position extrémale.

2. Dispositif d'obturation (1) selon la revendication précédente, **caractérisé en ce que** le décalage des butées de surcourse (9, 11) est tel que les volets (5b) autres que le volet moteur (5a) arrivent simultanément en contact avec leur butée de surcourse (9, 11) lorsqu'ils atteignent une position extrémale.

3. Dispositif d'obturation (1) selon la revendication 1, **caractérisé en ce que** le ou les volets (5b) les plus éloignés du volet moteur (5a) arrivent en premier en contact avec leurs butées de surcourse (9, 11) lorsqu'ils atteignent une position extrémale, les autres volets (5) arrivant ensuite selon un déphasage en contact avec leurs butées de surcourse (9, 11) lorsqu'ils atteignent une position extrémale.

4. Dispositif d'obturation (1) selon l'une quelconque des revendications précédentes, **caractérisé en ce que** le cadre support (3) présente au niveau de l'au moins une extrémité de chaque volet (5) une seule butée de surcourse (9), ladite butée de surcourse (9) présentant une première surface (S1) configurée pour coopérer avec un premier bord (15a) dudit volet (5) lorsqu'il occupe sa première position extrémale ouverte et une deuxième surface (S2) configurée pour coopérer avec un deuxième bord (15b) dudit volet (5) lorsqu'il occupe sa deuxième position extrémale fermée.

5. Dispositif d'obturation (1) selon l'une quelconque des revendications 1 à 3, **caractérisé en ce que** le cadre support (3) présente au niveau de l'au moins une extrémité de chaque volet (5) une première (9) et une deuxième (11) butées de surcourse, la première butée de surcourse (9) présentant une surface (S3) configurée pour coopérer avec le premier bord (15a) dudit volet (5) lorsqu'il occupe sa première position extrémale ouverte et la deuxième butée de surcourse (11) présentant une surface (S4) configurée pour coopérer avec le deuxième bord (15b) dudit volet (5) lorsqu'il occupe sa deuxième position extrémale fermée.

6. Dispositif de d'obturation (1) selon l'une quelconque des revendications précédentes, **caractérisé en ce que** la position des butées de surcourse (9) est décalée selon la hauteur définie entre les traverses d'extrémité (3b, 3b') du cadre support (3) de manière à assurer le déphasage de position des volets (5) lorsqu'ils arrivent dans leur première position extrémale ouverte.

7. Dispositif d'obturation (1) selon l'une quelconque des revendications précédentes, **caractérisé en ce que** la position des butées de surcourse (9, 11) est décalée selon la profondeur définie par la section latérale des traverses d'extrémité (3b, 3b') du cadre support (3) de manière à assurer le déphasage de position des volets (5) lorsqu'ils arrivent dans leur deuxième position extrémale fermée.

8. Dispositif d'obturation (1) selon l'une quelconque des revendications 6 ou 7, **caractérisé en ce que** les butées de surcourse (9, 11) sont agencées de façon décalée de manière à permettre une distribution de la force de pression de l'actionneur (7a) de manière à ce que la force de pression exercée par les volets (5) sur chaque butée de surcourse (9, 11) est inférieure à la limite en rupture (L) desdites butées de surcourse (9, 11).

9. Dispositif d'obturation (1) selon l'une quelconque des revendications précédentes, **caractérisé en ce que** le volet moteur (5a) est le volet (5) disposé le plus proche de la traverse d'extrémité supérieure (3b) du cadre support (3).

## Patentansprüche

1. Vorrichtung (1) zum Abdichten des Lufteinstroms am Frontteil eines Kraftfahrzeugs, die einen Stützrahmen (3) beinhaltet, der Folgendes aufweist:
• zwei Seitenholme (3a),
• zwei Außenquerstreben (3b, 3b'), die die zwei Seitenholme (3a) verbinden, und
• mindestens einen Satz Klappen (5), die zwischen einer ersten offenen Endposition und einer zweiten geschlossenen Endposition um eine Schwenkachse (P) schwenken, wobei die Schwenkachse (P) der Klappen (5) parallel zu den Außenquerstreben (3b, 3b') angeordnet ist, und
• mindestens ein Steuerelement (7), das dazu konfiguriert ist, die Positionierung der Klappen (5) anzusteuern, umfassend ein Stellglied (7a), das mit einer Klappe (5), die als motorisierte Klappe (5a) des Satzes Klappen (5) bezeichnet wird, verbunden ist, um die motorisierte Klappe (5a) schwenkend anzutreiben, wobei die anderen Klappen (5b) des Satzes Klappen (5) durch ein Steuerorgan (7b) mit der motorisierten Klappe (5a) verbunden sind,
wobei der Stützrahmen (3) im Bereich mindestens eines Endes jeder Klappe (5) mindestens einen Endanschlag (9, 11) umfasst, der dazu konfiguriert ist, der Klappe (5) als Abstützung zu dienen, wenn diese ihre erste offene Endposition oder ihre zweite geschlossene Endposition einnimmt,
**dadurch gekennzeichnet, dass** die Endanschläge (9, 11) gemäß einem Positionsversatz an dem Umfangsrahmen (3) angeordnet sind, sodass die motorisierte Klappe (5a) als letzte mit ihrem Endanschlag (9, 11) in Kontakt kommt, wenn sie eine Endposition erreicht.

2. Abdichtungsvorrichtung (1) nach dem vorhergehenden Anspruch, **dadurch gekennzeichnet, dass** der Versatz der Endanschläge (9, 11) derart ist, dass die Klappen (5b), mit Ausnahme der motorisierten Klappe (5a), gleichzeitig mit ihrem Endanschlag (9, 11) in Kontakt kommen, wenn sie eine Endposition erreichen.

3. Abdichtungsvorrichtung (1) nach Anspruch 1, **dadurch gekennzeichnet, dass** die eine oder die mehreren Klappen (5b), die am weitesten von der motorisierten Klappe (5a) entfernt sind, zuerst mit ihren Endanschlägen (9, 11) in Kontakt kommen, wenn sie eine Endposition erreichen, während die anderen Klappen (5) anschließend gemäß einer Phasenverschiebung mit ihren Endanschlägen (9, 11) in Kontakt kommen, wenn sie eine Endposition erreichen.

4. Abdichtungsvorrichtung (1) nach einem der vorhergehenden Ansprüche, **dadurch gekennzeichnet, dass** der Stützrahmen (3) im Bereich des mindestens einen Endes jeder Klappe (5) einen einzelnen Endanschlag (9) aufweist, wobei der Endanschlag (9) eine erste Oberfläche (S1), die dazu konfiguriert ist, mit einer ersten Kante (15a) der Klappe (5) zusammenzuwirken, wenn diese ihre erste offene Endposition einnimmt, und eine zweite Oberfläche (S2), die dazu konfiguriert ist, mit einer zweiten Kante (15b) der Klappe (5) zusammenzuwirken, wenn diese ihre zweite geschlossene Endposition einnimmt, aufweist.

5. Abdichtungsvorrichtung (1) nach einem der Ansprüche 1 bis 3, **dadurch gekennzeichnet, dass** der Stützrahmen (3) im Bereich des mindestens einen Endes jeder Klappe (5) einen ersten (9) und einen zweiten (11) Endanschlag aufweist, wobei der erste Endanschlag (9) eine Oberfläche (S3) aufweist, die dazu konfiguriert ist, mit der ersten Kante (15a) der Klappe (5) zusammenzuwirken, wenn diese ihre erste offene Endposition einnimmt, und der zweite Endanschlag (11) eine Oberfläche (S4) aufweist, die dazu konfiguriert ist, mit der zweiten Kante (15b) der Klappe (5) zusammenzuwirken, wenn diese ihre zweite geschlossene Endposition einnimmt.

6. Abdichtungsvorrichtung (1) nach einem der vorhergehenden Ansprüche, **dadurch gekennzeichnet, dass** die Position der Endanschläge (9) gemäß der zwischen den Außenquerstreben (3b, 3b') des Stützrahmens (3) definierten Höhe versetzt ist, um die Phasenverschiebung der Position der Klappen (5), wenn diese in ihrer ersten offenen Endposition ankommen, sicherzustellen.

7. Abdichtungsvorrichtung (1) nach einem der vorhergehenden Ansprüche, **dadurch gekennzeichnet, dass** die Position der Endanschläge (9, 11) gemäß der durch den seitlichen Querschnitt der Außenquerstreben (3b, 3b') des Stützrahmens (3) definierten Tiefe versetzt ist, um die Phasenverschiebung der Position der Klappen (5), wenn diese in ihrer zweiten geschlossenen Endposition ankommen, sicherzustellen.

8. Abdichtungsvorrichtung (1) nach einem der Ansprüche 6 oder 7, **dadurch gekennzeichnet, dass** die Endanschläge (9, 11) versetzt eingerichtet sind, um eine Verteilung der Druckkraft des Stellglieds (7a) zu gestatten, damit die durch die Klappen (5) auf jeden Endanschlag (9, 11) ausgeübte Druckkraft kleiner als die Bruchfestigkeit (L) der Endanschläge (9, 11) ist.

9. Abdichtungsvorrichtung (1) nach einem der vorhergehenden Ansprüche, **dadurch gekennzeichnet, dass** die motorisierte Klappe (5a) die Klappe (5) ist, die am nächsten an der oberen Außenquerstrebe (3b) des Stützrahmens (3) angeordnet ist.

## Claims

1. Closing device (1) for a front face air inlet of a motor vehicle comprising a support frame (3) having:
• two lateral uprights (3a),
• two end crossmembers (3b, 3b') linking the two lateral uprights (3a), and
• at least one set of flaps (5) pivoting about a pivoting axis (P) between a first, extreme open position and a second, extreme closed position, the pivoting axis (P) of the flaps (5) being disposed parallel to the end crossmembers (3b, 3b'), and
• at least one control element (7) configured to drive the positioning of the flaps (5) comprising an actuator (7a) linked to a flap (5), called driving flap (5a) of the set of flaps (5), so as to drive the pivoting of said driving flap (5a), the other flaps (5b) of the set of flaps (5) being linked to said driving flap (5a) by a control member (7b),
the support frame (3) comprising, at at least one end of each flap (5), at least one overtravel abutment (9, 11) configured to serve as seat for the flap (5) when it occupies its first, extreme open position or its second, extreme closed position,
**characterized in that** the overtravel abutments (9, 11) are disposed on the peripheral frame (3) according to a position offset so that the driving flap (5a) is the last to come into contact with its overtravel abutment (9, 11) when it reaches an extreme position.

2. Closing device (1) according to the preceding claim, **characterized in that** the offset of the overtravel abutments (9, 11) is such that the flaps (5b) other than the driving flap (5a) come simultaneously into contact with their overtravel abutment (9, 11) when they reach an extreme position.

3. Closing device (1) according to Claim 1, **characterized in that** the flap or flaps (5b) farthest away from the driving flap (5a) are the first to come into contact with their overtravel abutments (9, 11) when they reach an extreme position, the other flaps (5) then coming into contact with their overtravel abutments (9, 11) when they reach an extreme position according to a phase shift.

4. Closing device (1) according to any one of the preceding claims, **characterized in that** the support frame (3) has, at the at least one end of each flap (5), a single overtravel abutment (9), said overtravel abutment (9) having a first surface (S1) configured to cooperate with a first edge (15a) of said flap (5) when it occupies its first, extreme open position and a second surface (S2) configured to cooperate with a second edge (15b) of said flap (5) when it occupies its second, extreme closed position.

5. Closing device (1) according to any one of Claims 1 to 3, **characterized in that** the support frame (3) has, at the at least one end of each flap (5), a first (9) overtravel abutment and a second (11) overtravel abutment, the first overtravel abutment (9) having a surface (S3) configured to cooperate with the first edge (15a) of said flap (5) when it occupies its first, extreme open position and the second overtravel abutment (11) having a surface (S4) configured to cooperate with the second edge (15b) of said flap (5) when it occupies its second, extreme closed position.

6. Closing device (1) according to any one of the preceding claims, **characterized in that** the position of the overtravel abutments (9) is offset according to the height defined between the end crossmembers (3b, 3b') of the support frame (3) so as to ensure the positional phase-shift of the flaps (5) when they arrive in their first, extreme open position.

7. Closing device (1) according to any one of the preceding claims, **characterized in that** the position of the overtravel abutments (9, 11) is offset according to the depth defined by the lateral section of the end crossmembers (3b, 3b') of the support frame (3) so as to ensure the positional phase-shift of the flaps (5) when they arrive in their second, extreme closed position.

8. Closing device (1) according to either one of Claims 6 and 7, **characterized in that** the overtravel abutments (9, 11) are arranged offset so as to allow a distribution of the pressing force of the actuator (7a) so that the pressing force exerted by the flaps (5) on each overtravel abutment (9, 11) is less than the maximum stress limit (L) of said overtravel abutments (9, 11).

9. Closing device (1) according to any one of the preceding claims, **characterized in that** the driving flap (5a) is the flap (5) positioned closest to the top end crossmember (3b) of the support frame (3).
